# EUROPEAN PATENT SPECIFICATION

(11) **EP 0 799 440 B1**
(45) Date of publication and mention of the grant of the patent: **02.02.2000**
(21) Application number: 95941167.9
(22) Date of filing: 15.12.1995
(51) Int. Cl.: G05B 9/02

(54) **IMPROVEMENTS IN OR RELATING TO ELECTRICALLY ISOLATED TRANSDUCER CIRCUITS**
VERBESSERUNGEN AN ODER IN BEZUG AUF ELEKTRISCH ISOLIERTEN WANDLERSCHALTUNGEN
AMELIORATIONS CONCERNANT DES CIRCUITS A TRANSDUCTEUR ELECTRIQUEMENT ISOLES

(30) Priority: 19.12.1994 GB 9425526
(43) Date of publication of application: 08.10.1997
(73) Proprietor: Pepperl + fuchs Manufacturing (GB) Limited, Oldham, Lancashire OL1 4EL (GB)
(72) Inventor: MIRAMS, Hugh, Christopher 58 Inghead Terrace, West Yorkshire HX3 7LB (GB)
(74) Representative: Hill, Richard
(86) International application number: GB9502926
(87) International publication number: WO9619756

(56) References cited:
- EP-A- 0 180 423
- US-A- 3 797 311
- US-A- 4 476 706
- US-A- 5 363 409

## Description

This invention relates to improvements in or relating to electrically isolated transducer circuits.

Process control systems conventionally use transducers to collect information relating to physical variables, the transducer providing an electrical signal indicative of the detected physical variable. Examples of transducers commonly used are load cells for measuring weight, potentiometers for measuring mechanical movement, cells for measuring pressure changes and resistance thermometers or thermocouples for measuring temperature.

Generally speaking, the relationship between the physical variables and the electrical signal produced by the transducer is not always direct by which is meant that the same incremental change in the physical variable does not always cause the same incremental change in the electrical signal. For example, if a platinum resistance thermometer is used which has a resistance of 100Ω at 0°C, a change in temperature from 0°C to 1°C causes a resistance change of 0.39Ω but the same incremental change from 200°C to 201°C causes a resistance change of 0.37Ω. The relationship between the physical variable and the electrical output of a transducer can often be described by way of a complex polynomial relationship, however this is inconvenient and complicated and the process control system operates more conveniently and simply if the relationship between the physical variable and transducer output is substantially linear.

Accordingly it has hitherto been the practice to convert the output from the transducer into a form which has a direct linear relationship to the physical variable in specially designed amplifier circuits before the signals are relayed to the process control system.

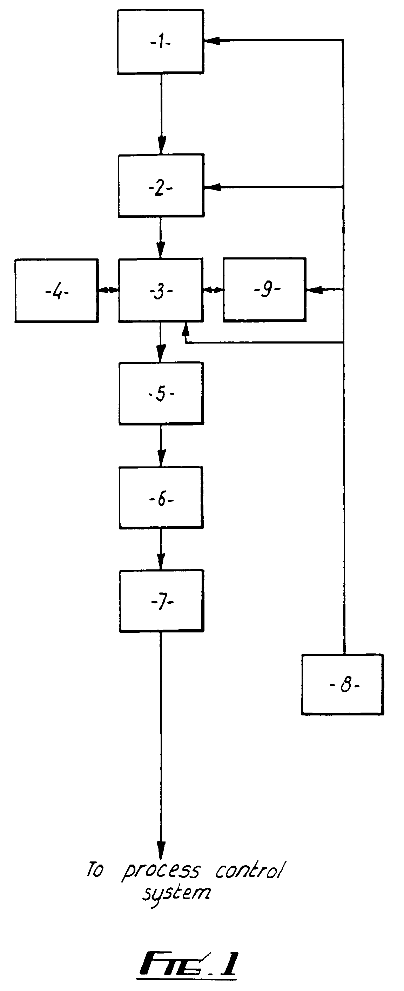

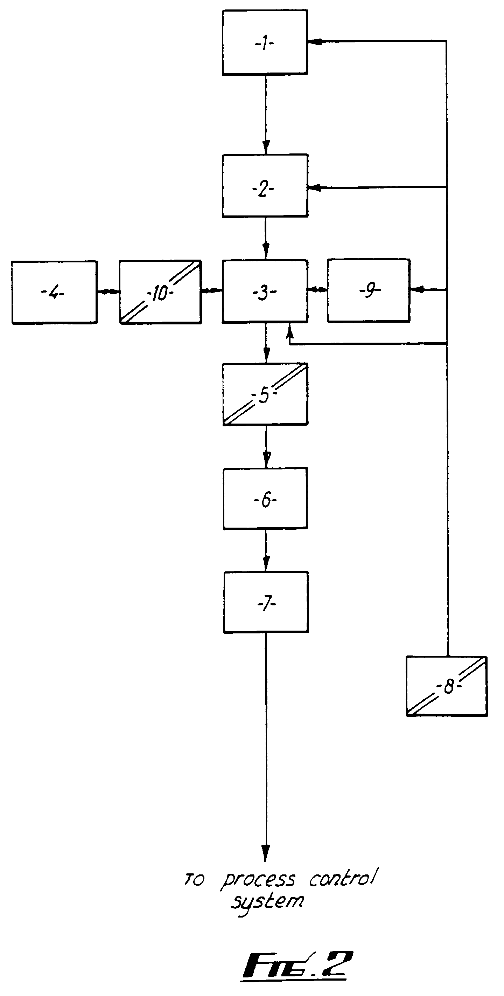

Examples of prior art arrangements which operate in this way are shown in Figs. 1 and 2 of the drawings and will be described more fully hereafter.

However, these prior art arrangements suffer from a number of problems. One important application of process control systems using transducers of this kind is in an environment where explosive or combustible substances are present. In such circumstances a common solution is to provide intrinsic safety between the transducer and/or amplifier circuit and the process control system whereby the transducer in the explosive environment is electrically isolated from the amplifier circuit and the process control system. In some applications it is desirable to be able to selectively set the type of physical variable to be measured or the range in which a selected physical variable is to be measured. In these circumstances a setting device is connected to the circuit to allow such parameters to be set. However, where a setting device is connected to the circuit, the problem arises that, any external connection to the circuit potentially compromises the isolation provided by the isolator and therefore in order to ensure that this does not occur, the prior art has proposed two solutions, either the provision of a further isolator between the setting device and the circuit or to provide isolation with the process control system itself. The provision of an additional isolator of course increases the cost of manufacture of the circuit and can lead to problems with the size of the circuit. Also, to make the process control system itself intrinsically safe is very expensive and complicated.

It is an object of the present invention to provide an electrically isolated transducer circuit which solves the problems associated with the prior art arrangements mentioned above.

According to the present invention therefore there is provided an electrically isolated transducer circuit comprising a transducer for measuring a physical variable and to produce a signal indicative of the magnitude thereof, processing means for processing signals received from the transducer, an output to receive signals from the processing means and provide such signals to a process control system, an output electrical isolation means between said processing means and said output to electrically isolate said transducer and said processing means from said output, an isolated power supply to power said circuit and a setting means connected to said processing means to allow transducer parameters to be selectively input thereto, characterised in that said setting means is isolated from said transducer by way of said output isolation means and said isolated power supply.

With this arrangement it is possible for an electrically isolated transducer circuit to be constructed which is not complex or bulky in construction and which allows control signals to pass between the transducer and processing circuitry for controlling operation of the control circuit without compromising the electrical isolation therebetween.

The invention will now be described further by way of example only and with reference to the accompanying drawings of which:
**Figs. 1 and 2** show schematic diagrams of two forms of prior art circuits; and
**Fig. 3** shows a schematic diagram of one embodiment of circuit in accordance with the present invention.

Referring now to Figs. 1 and 2, Fig. 1 shows transducer circuit in which the setting device 4 is a remote device which is in communication with the processor 3. The processor also includes a memory 9 of a suitable form in which information received from the setting device 4 can be stored. In this arrangement, it will be appreciated that the electrical isolation of the transducer from the output circuit 7 is compromised each time the setting device 4 is connected to the circuit. Thus, in instances where intrinsic safety is necessary, the connection to the setting device 4 would have to be broken prior to the circuit being used for measurement purposes or the setting device 4 made itself intrinsically safe. The circuit is powered by an isolated power supply 8 of conventional type.

Fig. 2 shows a transducer circuit which attempted to overcome the problems associated with the circuit of Fig. 1. In this circuit it will be seen that a further isolation device 10 has been added to the circuit between the setting device 4 and the processor 3. The provision of this additional isolator 10 allows the setting device 4 to be continuously connected to the circuit without compromising the isolation of the transducer 1 from the output circuit 7, thereby allowing the circuit to be used when intrinsic safety is required. However the problem with this arrangement is that the addition of the additional isolation device 10 increases significantly the cost of the circuit and can also be prohibitive when size considerations are taken into account.

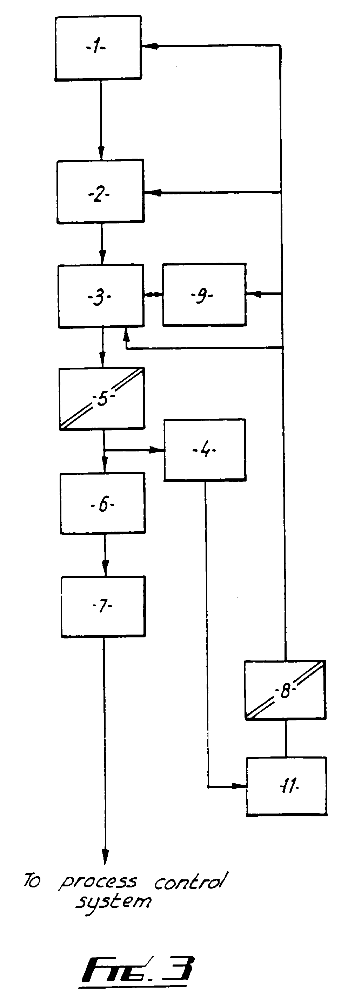

Fig. 3 shows one circuit in accordance with the present invention, which circuit has been designed to overcome the problems mentioned above in relation to the prior art circuits of Figs. 1 and 2. This circuit is of a similar type to those shown in Figs. 1 and 2 and the same reference numerals will be used to denote the same elements. As can be seen, in this circuit, a setting device 4 is connected between the output of the isolation device 5 and, via a binary to frequency convertor 11, the isolated circuit power supply 8. With the setting device 4 connected in this way, it can be seen that the setting device 4 is connected on the opposite side of the isolator device 5 to the transducer 1. This then being the case, it can be seen that the setting device 4 is not required to satisfy the criteria for intrinsic safety since it is effectively isolated by the isolator 5 and the isolated power supply 8 from the transducer 1.

The circuit operates as follows:

The power supply for the circuit comprises an isolated supply 8 of known form which operates to take the d.c. power supplied by the supply and to change it into an a.c. signal which is fed to an isolating transformer (not shown). On the secondary side of the transformer, the a.c. signal is rectified and converted in a conventional manner to a d.c. signal. The frequency of oscillation of the signal is usually arranged to be relatively high to allow the use of relatively small transformers. The isolated power supply 8 provides power for all elements of the circuit and is also linked to the processor 3 to provide a signal path between the setting device 4 and the processor 3. The setting device 4 communicates with the processor 3 by passing signals to a conversion device 11 in the form of binary digits and the conversion device 11 converts these binary signals into two different high frequencies (for example in one embodiment a binary "O" is converted to 47KHz and a binary "1" to 24KHz). These signals are fed to the processor 3 via isolated supply 8 which detects the high frequencies and converts them back to a series of binary digits. In this way it will be appreciated that the setting device 4 can communicate with the processor 3 without compromising the intrinsic safety of the circuit. This type of communication is usually referred to as frequency shift keying.

The processor 3 communicates with the output 7 by sending a processed signal from the transducer 1 to the isolator 5 in the form of a pulse width modulated signal in which the ratio of the time in the high state to the total cycle time indicates the level of the measured physical variable. The signal is then passed to a signal format convertor 6 which converts the pulse width modulated signal to a measurement signal which the output circuit 7 receives. The output circuit 7 can then send a signal directly proportional to the physical variable to be measured to a process control system. Whilst the convertor 6 and output circuit 7 are shown as separate in the figures, these can be combined in a single circuit if desired.

The processor 3 is also able to communicate with the setting device 4 and such communication can be simultaneous with its communication with the output circuit 7. When communicating with the setting device 4, the processor 3 produces two different frequency signals to represent a series of binary digits (in one embodiment a frequency of 600Hz represents a binary "O" and a frequency of 300HZ represents a binary "1"). A signal modulated to these two different frequencies is passed to the setting device 4 which interprets the two different frequencies as a series of binary digits. It will be appreciated that a signal passing from the processor 3 can be pulse width modulated and frequency shift keyed in order that simultaneous communication can be established with the output circuit 7 and the setting device 4. This possibility arises due to the fact that pulse width modulation is essentially non-frequency dependent.

Thus it can be seen that the arrangement of the present invention allows the provision of a circuit in which a setting device 4 can be permanently connected to a processor without compromising the isolation of the circuit and in such a manner that the processor can communicate simultaneously with an output and the setting device. Furthermore, since the isolation of the circuit is not compromised, no additional isolators or modification to the setting device to be isolated are required in the manner of the prior art circuits.

## Claims

1. An electrically isolated transducer circuit comprising a transducer (1) for measuring a physical variable and to produce a signal indicative of the magnitude thereof, processing means (3) for processing signals received from the transducer (1), an output (7) to receive signals from the processing means (3) and provide such signals to a process control system, an output electrical isolation means (5) between said processing means (3) and said output (7) to electrically isolate said transducer (1) and said processing means (3) from said output (7), an isolated power supply (8) to power said circuit and a setting means (4) connected to said processing means (3) to allow transducer parameters to be selectively input thereto, characterised in that said setting means (4) is isolated from said transducer (1) by way of said output isolation means (5) and said isolated power supply (8).

2. A transducer circuit according to claim 1 wherein said processor (3) can communicate with said setting means (4) by providing a frequency shift keyed signal which is passed to said setting means (4), said setting means (4) interprets said signal as a series of binary digits, said digits being defined by the different frequencies in the signal.

3. A transducer circuit according to claim 1 or claim 2 wherein said circuit further includes a binary to frequency conversion means (11) connected between the setting means (4) and the processing means (3) whereby said setting means (4) can communicate with said processing means (3) by producing a frequency shift keyed signal which is passed to the processing means (3), said processing means (3) interprets said signal as a series of binary digits, said digits being defined by the different frequencies in the signal.

4. A transducer circuit according to any one of claims 1 to 3 wherein a signal format conversion means (6) is provided between said processing means (3) and said output (7), said processing means (3) being adapted to produce a pulse width modulated signal whose ratio of peak/cycle time is indicative of a measured value of a physical variable and said signal format conversion means (6) is operable to convert said pulse width modulated signal into a measurement signal which is passed to the output.

5. A transducer circuit according to claim 3 or claim 4 wherein signals passing from said setting means (4) to said processing means (3) are converted by said binary to frequency conversion means (11) into a frequency of substantially 47KHz, corresponding to binary digit "0", and a frequency of substantially 24KHz corresponding to binary digit "1".

6. A transducer circuit according to any one of claims 2 to 5 wherein signals passing from the processing means (3) to the setting means (4) are converted into a frequency of substantially 600Hz, corresponding to binary digit "0", and a frequency of substantially 300Hz corresponding to a binary digit "1".

7. A transducer circuit according to any one of claims 1 to 6 wherein said processing means (3) is operable to communicate with said output (7) and said setting means (4) simultaneously utilising a signal which is both pulse width modulated and frequency shift keyed.

## Patentansprüche

1. Elektrisch isolierte Wandlerschaltung
- mit einem Meßwertwandler (1), um eine physikalische Größe zu messen und um ein Signal zu erzeugen, durch welches deren Größe anzeigbar ist,
- mit einer Verarbeitungseinrichtung (3), um vom Meßwertwandler (1) erhaltene Signale zu verarbeiten,
- mit einem Ausgang (7), um Signale von der Verarbeitungseinrichtung (3) zu empfangen und um solche Signale an ein Verarbeitungs-Steuerungssystem bereitzustellen,
- mit einer elektrischen Isolationseinrichtung (5) für den Ausgang zwischen der Verarbeitungseinrichtung (3) und dem Ausgang (7), um den Meßwertwandler (1) und die Verarbeitungseinrichtung (3) vom Ausgang (7) elektrisch zu isolieren,
- mit einer isolierten Energieversorgung (8), um die Schaltung und eine Einstelleinrichtung (4) zu speisen, welche mit der Verarbeitungseinrichtung (3) verbunden ist, um zu ermöglichen, daß Meßwertwandler-Parameter selektiv dorthin eingegeben werden,
dadurch **gekennzeichnet,**
daß die Einstelleinrichtung (4) mittels der Isolationseinrichtung (5) für den Ausgang und mittels der isolierten Energieversorgung (8) vom Meßwertwandler (1) isoliert ist.

2. Wandlerschaltung nach Anspruch 1,
bei welcher der Prozessor (3) mit der Einstelleinrichtung (4) kommunizieren kann durch Bereitstellen eines frequenzumgetasteten Signals, welches an die Einstelleinrichtung (4) übermittelt wird,
bei welcher die Einstelleinrichtung (4) dieses Signal als eine Reihe Binärstellen interpretiert und bei welcher die Stellen durch die unterschiedlichen Frequenzen im Signal definiert sind.

3. Wandlerschaltung nach einem der Ansprüche 1 oder 2, bei welcher die Schaltung ferner zwischen der Einstelleinrichtung (4) und der Verarbeitungseinrichtung (3) eine Binär-Frequenz-Umwandlungseinrichtung (11) aufweist, wodurch die Einstelleinrichtung (4) mit der Verarbeitungseinrichtung (3) kommunizieren kann, und zwar durch Erzeugen eines frequenzumgetasteten Signales, welches an die Verarbeitungseinrichtung (3) übertragen wird,
bei welcher die Verarbeitungseinrichtung (3) das Signal als eine Reihe von Binärstellen interpretiert und
bei welcher die Stellen durch die unterschiedlichen Frequenzen im Signal definiert sind.

4. Wandlerschaltung nach einem der Ansprüche 1 bis 3, bei welcher zwischen der Verarbeitungseinrichtung (3) und dem Ausgang (7) eine Signalformat-Umwandlungseinrichtung (6) vorgesehen ist,
bei welcher die Verarbeitungseinrichtung (3) zum Erzeugen eines pulsbreitenmodulierten Signals ausgebildet ist, durch dessen Verhältnis von Höchstwert zu Zykluszeit der gemessene Wert der physikalischen Größe anzeigbar ist und
bei welcher die Signalformat-Umwandlungseinrichtung (6) betätigbar ist, um das pulsbreitenmodulierte Signal in ein Meßsignal umzuwandeln, welches an den Ausgang übergeleitet wird.

5. Wandlerschaltung nach einem der Ansprüche 3 oder 4, bei welcher die von der Einstelleinrichtung (4) zur Verarbeitungseinrichtung (3) übergeleiteten Signale durch die Binär-Frequenz-Umwandlungseinrichtung (11) in eine Frequenz von im wesentlichen 47 kHz, welche mit der Binärstelle "0" korrespondiert, und eine Frequenz von im wesentlichen 24 kHz, welche mit der Binärstelle "1" korrespondiert, umgewandelt werden.

6. Wandlerschaltung nach einem der Ansprüche 2 bis 5, bei welcher die von der Verarbeitungseinrichtung (3) an die Einstelleinrichtung (4) übergeleiteten Signale in eine Frequenz von im wesentlichen 600 Hz, welche mit der Binärstelle "0" korrespondiert, und in eine Frequenz von im wesentlichen 300 Hz, welche mit der Binärstelle "1" korrespondiert, umgewandelt werden.

7. Wandlerschaltung nach einem der Ansprüche 1 bis 6, bei welcher die Verarbeitungseinrichtung (3) betreibbar ist, um mit dem Ausgang (7) und der Einstelleinrichtung (4) zu kommunizieren, und zwar durch gleichzeitiges Verwenden eines Signals, welches sowohl pulsbreitenmoduliert als auch frequenzumgetastet ist.

## Revendications

1. Circuit à transducteur électriquement isolé, comprenant un transducteur (1) destiné à mesurer une variable physique et à produire un signal indicatif de sa valeur, un moyen de traitement (3) destiné à traiter des signaux reçus en provenance du transducteur (1), une sortie (7) pour recevoir des signaux provenant du moyen de traitement (3) et transmettre ces signaux à un système de commande de processus, un moyen (5) d'isolation électrique de la sortie placé entre ledit moyen de traitement (3) et ladite sortie (7) pour isoler électriquement ledit transducteur (1) et ledit moyen de traitement (3) de ladite sortie (7), une source de puissance isolée (8) pour alimenter ledit circuit, et un moyen de réglage (4) connecté audit moyen de traitement (3) pour permettre d'y entrer sélectivement des paramètres du transducteur, caractérisé par le fait que ledit moyen de réglage (4) est isolé dudit transducteur (1) par ledit moyen (5) d'isolation de la sortie et ladite source de puissance isolée (8).

2. Circuit à transducteur selon la revendication 1, dans lequel ledit moyen de traitement (3) peut communiquer avec ledit moyen de réglage (4) en fournissant un signal codé par décalage de fréquence qui est transmis audit moyen de réglage (4), ledit moyen de réglage (4) interprétant ledit signal comme une série de bits, lesdits bits étant définis par les différentes fréquences de ce signal.

3. Circuit à transducteur selon la revendication 1 ou 2, dans lequel ledit circuit comprend en outre un moyen (11) de conversion de binaire à fréquence, connecté entre ledit moyen de réglage (4) et le moyen de traitement (3), par lequel ledit moyen de réglage (4) peut communiquer avec ledit moyen de traitement (3) en produisant un signal codé par décalage de fréquence qui est transmis au moyen de traitement (3), ledit moyen de traitement (3) interprétant ledit signal comme une série de bits, lesdits bits étant définis par les différentes fréquences de ce signal.

4. Circuit à transducteur selon l'une quelconque des revendications 1 à 3, dans lequel un moyen (6) de conversion de format de signal est placé entre ledit moyen de traitement (3) et ladite sortie (7), ledit moyen de traitement (3) étant apte à produire un signal à largeur d'impulsion modulée, dont le rapport de la durée à l'état haut à la durée du cycle est indicatif d'une valeur mesurée d'une variable physique, et ledit moyen (6) de conversion de format de signal est utilisable pour convertir ledit signal à largeur d'impulsion modulée en un signal de mesure qui est transmit à la sortie.

5. Circuit à transducteur selon la revendication 3 ou 4, dans lequel des signaux transmis dudit moyen de réglage (4) audit moyen de traitement (3) sont convertis par ledit moyen (11) de conversion binaire à fréquence en une fréquence de sensiblement 47 kHz, correspondant à l'élément binaire "0", et en une fréquence de sensiblement 24 kHz correspondant à l'élément binaire "1".

6. Circuit à transducteur selon l'une quelconque des revendications 2 à 5, dans lequel des signaux transmis du moyen de traitement (3) au moyen de réglage (4) sont convertis en une fréquence de sensiblement 600 Hz, correspondant à l'élément binaire "0", et en une fréquence de sensiblement 300 Hz correspondant à l'élément binaire "1".

7. Circuit à transducteur selon l'une quelconque des revendications 1 à 6, dans lequel ledit moyen de traitement (3) est utilisable pour communiquer simultanément avec ladite sortie (7) et avec ledit moyen de réglage (4) en utilisant un signal qui est à la fois à largeur d'impulsion modulée et codé par décalage de fréquence.
